# EUROPEAN PATENT APPLICATION

(11) **EP 3 351 783 A1**
(43) Date of publication of application: **25.07.2018**
(21) Application number: 16846121.8
(22) Date of filing: 29.07.2016
(51) Int. Cl.: F02D 41/34, F02D 41/02, F02D 41/04, F02D 45/00, F02M 61/14, F02M 63/00

(54) **FUEL INJECTION CONTROL DEVICE**

(30) Priority: 17.09.2015 JP 2015183542
(71) Applicant: Hitachi Automotive Systems, Ltd., Hitachinaka-shi Ibaraki 312-8503 (JP)
(72) Inventor: KIHARA, Yuusuke, Tokyo 100-8280 (JP); SUKEGAWA, Yoshihiro, Tokyo 100-8280 (JP); ORYOJI, Kazuhiro, Tokyo 100-8280 (JP); OGATA, Kenichiro, Tokyo 100-8280 (JP); OOSUGA, Minoru, Tokyo 100-8280 (JP); SARUWATARI, Masayuki, Hitachinaka-shi Ibaraki 312-8503 (JP)
(74) Representative: MERH-IP Matias Erny Reichl Hoffmann Patentanwälte PartG mbB
(86) International application number: PCT/JP2016/072254
(87) International publication number: WO 2017/047248

(57) **Abstract**

An object of the invention is to form a highly homogeneous air-fuel mixture which is not influenced by an engine rotation speed.

Therefore, the invention provides a fuel injection control device including a cylinder, a first injector disposed at an upper portion of the cylinder in the axial direction and a center portion thereof in the radial direction, an intake valve disposed at an upper portion of the cylinder in the axial direction and an outer portion thereof in the radial direction in relation to the first fuel injection device, and a second injector supplying fuel from an upper portion of the cylinder in the axial direction and at least an outer portion in the radial direction in relation to the intake valve, in which a rotation speed of the engine is high, a fuel supply amount ratio of the first injector with respect to the second injector is controlled to be larger than that of a case where the rotation speed is low.

## Description

### Technical Field

The present invention relates to a fuel injection control device for an engine having first and second injectors for each cylinder.

### Background Art

In order to perform stratified combustion (fuel lean combustion) and homogeneous combustion at the same time with high performance, a method of providing two injectors in one cylinder is proposed. For example, PTL 1 discloses a method of using two types of injectors having different spray angles, spray penetration forces, particle diameters, and flow characteristics in order to perform stratified combustion for a low/middle load and homogeneous combustion for a high load in a two-cycle engine.

The stratified combustion is a method of reducing pump loss generated on narrowing a throttle by sucking air into a combustion chamber so that an operation air-fuel ratio becomes larger than a theoretical mixing ratio, and in order to perform stable combustion in this condition, it is necessary to stratify an air-fuel mixture of an equivalent ratio of around 1 in the vicinity of an ignition plug. For that reason, there is known a method of surely forming an air-fuel mixture around an ignition plug by injecting fuel immediately before ignition while the ignition plug and an injector are adjacent to each other. In this case, it is desirable that the static flow of the injector is small and the spray penetration force is small. In contrast, it is necessary to form a homogeneous air-fuel mixture inside the combustion chamber in order to burn the fuel fast at the time of a high load from the viewpoint of high output and improved knock resistance. Therefore, it is desirable that the static flow of the injector is large and the spray penetration force is large in order to diffuse the spray in the entire area of the combustion chamber without the influence of the air flow. In this way, since the stratified combustion and the homogeneous combustion require different specifications for the injector, a moderate specification is adopted in order to realize this function with one injector and thus the performance cannot be exhibited to the limit. However, as described above, when two injectors are provided, the injectors can be separately used to form a stratified air-fuel mixture and a homogeneous air-fuel mixture.

### Citation List

### Patent Literature

PTL 1: Japanese Unexamined Patent Application Publication No. 7-247841

### Summary of Invention

### Technical Problem

For example, fuel is injected during an intake cycle in order to form a homogeneous air-fuel mixture in a direct injection engine, but an air flow is generated in the vicinity of the intake valve during the intake cycle in which air is sucked.

The fuel spray is influenced by the flow, but since the flow is substantially proportional to an engine rotation speed, the influence is small when the engine rotation speed is low and thus the spray can proceed in the injection direction. However, when the engine rotation speed is high, the spray flows along the flow and hence proceeds to be offset from the injection direction.

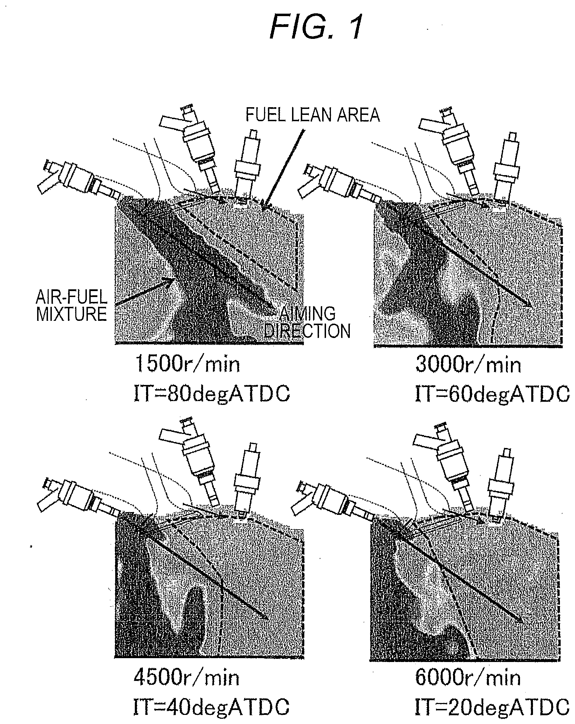

A result obtained by analyzing the influence of the rotation speed through a numerical simulation is illustrated in FIG. 1. This illustrates a distribution of an air-fuel mixture in a condition that an injector for homogeneous combustion is disposed at an intake side of a cylinder and a rotation speed is 1500, 3000, 4500, and 6000 r/min at a uniform engine load and is displayed at the timing of 100 degATDC. The fuel is injected toward the exhaust lower side (the right lower side of the drawing) from the injector and the air-fuel mixture substantially proceeds in the aiming direction at 1500 r/min. When the injector is disposed at the intake side, an area in which an air-fuel mixture concentration is low (hereinafter, referred to as a fuel lean area) is formed at an upper exhaust side (the right upper side of the drawing) which is not aimed in order to avoid the interference between the intake valve and the spray. According to the result when the engine rotation speed is 3000 r/min or more, since the air flowing from the intake valve becomes faster as the engine rotation speed becomes higher, the air-fuel mixture is largely biased toward the intake side as the engine rotation speed increases and thus the fuel lean area is widened.

From this result, if fuel is injected at the same fuel ratio between two injectors in accordance with an increase in engine rotation speed when fuel is injected by providing two injectors at the upper portion of the center portion of the combustion chamber and the intake side of the combustion chamber, the fuel injected from the intake side of the combustion chamber is largely biased toward the intake side as the engine rotation speed increases so that an excessively rich air-fuel mixture is formed. Further, since the fuel injected from the intake side does not reach the exhaust side, the fuel injected from the upper portion of the combustion chamber at the exhaust side forms a lean air-fuel mixture. Accordingly, since the homogeneity of the air-fuel mixture at the ignition timing becomes worse, there is concern that combustion efficiency may be deteriorated and output may be reduced.

Further, if fuel is injected by providing the injector at the upper portion of the center portion of the combustion chamber and the intake pipe, the fuel is injected from the injector provided at the intake pipe during the exhaust cycle so that the fuel becomes fine particles by a high-speed air flow generated immediately after opening the intake valve and air is sucked from the entire circumference of the intake valve. In this way, the homogeneity can be increased. However, when the engine rotation speed becomes high, the fuel injection cannot be completed during the exhaust cycle and the fuel injected during the intake cycle directly enters the combustion chamber so that the fuel adheres to the cylinder or the piston. Thus, the exhaust performance is deteriorated. Further, when the injection timing of the exhaust cycle becomes faster, a time until the injected fuel is sucked becomes long. Accordingly, since the spray is gasified and the air-fuel mixture is formed inside the intake pipe, a problem arises in that the amount of air to be sucked decreases.

In this way, when the first and second injectors have the same fuel ratio in accordance with a change in engine rotation speed at the homogeneous combustion condition, a problem arises in that the homogeneity of the air-fuel mixture is deteriorated.

An object of the invention is to form a highly homogeneous air-fuel mixture which is not influenced by an engine rotation speed.

### Solution to Problem

The invention provides a fuel injection control device including a cylinder, a first injector disposed at an upper portion of the cylinder in the axial direction and a center portion thereof in the radial direction, an intake valve disposed at an upper portion of the cylinder in the axial direction and an outer portion thereof in the radial direction in relation to the first fuel injection device, and a second injector supplying fuel from an upper portion of the cylinder in the axial direction and at least an outer portion in the radial direction in relation to the intake valve, in which a rotation speed of the engine is high, a fuel supply amount ratio of the first injector with respect to the second injector is controlled to be larger than that of a case where the rotation speed is low.

Further, the second injector is preferably disposed at an upper portion of the cylinder and an outer portion thereof in the radial direction in relation to the intake valve.

Further, the engine preferably includes an intake pipe which supplies air to the cylinder through the intake valve and the second injector is preferably disposed at the intake pipe.

### Advantageous Effects of Invention

According to the invention, since the fuel supply amount ratio of the first injector is increased and the fuel supply amount ratio of the second injector is decreased when the engine rotation speed is high, it is possible to form a highly homogeneous air-fuel mixture. As a result, it is possible to improve combustion efficiency and obtain a high output.

### Brief Description of Drawings

[FIG. 1] FIG. 1 illustrates a simulation result of a conventional injection type.
[FIG. 2] FIG. 2 illustrates a configuration of an intake pipe cross-section of the invention.
[FIG. 3] FIG. 3 illustrates a configuration of a cylinder center cross-section of the invention.
[FIG. 4] FIG. 4 illustrates a fuel injection amount ratio of first and second injectors with respect to an engine rotation speed.
[FIG. 5] FIG. 5 illustrates spray patterns of the first and second injectors.
[FIG. 6] FIG. 6 illustrates a stratified/homogeneous combustion switching map with respect to an engine rotation speed and an injection amount.
[FIG. 7] FIG. 7 illustrates a fuel pressure map with respect to an engine rotation speed and an injection amount.
[FIG. 8] FIG. 8 illustrates an injection timing map with respect to an engine rotation speed.
[FIG. 9] FIG. 9 illustrates a distribution of an air-fuel mixture at 90 degATDC of a first embodiment.
[FIG. 10] FIG. 10 illustrates a distribution of an air-fuel mixture at a piston bottom dead center portion of the first embodiment.
[FIG. 11] FIG. 11 illustrates a distribution of an air-fuel mixture at 270 degATDC of the first embodiment.
[FIG. 12] FIG. 12 illustrates a distribution of an air-fuel mixture at 320 degATDC of the first embodiment.
[FIG. 13] FIG. 13 illustrates a distribution of an air-fuel mixture at 80 degATDC of the first embodiment.
[FIG. 14] FIG. 14 illustrates a distribution of an air-fuel mixture at a piston bottom dead center portion of the first embodiment.
[FIG. 15] FIG. 15 illustrates a distribution of an air-fuel mixture at 270 degATDC of the first embodiment.
[FIG. 16] FIG. 16 illustrates a distribution of an air-fuel mixture at 320 degATDC of the first embodiment.
[FIG. 17] FIG. 17 illustrates a distribution of an air-fuel mixture at 80 degATDC of the first embodiment.
[FIG. 18] FIG. 18 illustrates a distribution of an air-fuel mixture at a piston bottom dead center portion of the first embodiment.
[FIG. 19] FIG. 19 illustrates a distribution of an air-fuel mixture at 270 degATDC of the first embodiment.
[FIG. 20] FIG. 20 illustrates a distribution of an air-fuel mixture at 320 degATDC of the first embodiment.
[FIG. 21] FIG. 21 illustrates a configuration of a second embodiment.
[FIG. 22] FIG. 22 illustrates a configuration of an injector attachment cross-section of the second embodiment.
[FIG. 23] FIG. 23 illustrates a fuel injection amount ratio of first and second injectors of the second embodiment.
[FIG. 24] FIG. 24 illustrates spray patterns of the first and second injectors of the second embodiment.
[FIG. 25] FIG. 25 illustrates a stratified/homogeneous combustion switching map of the second embodiment.
[FIG. 26] FIG. 26 illustrates a fuel pressure map of the second embodiment.
[FIG. 27] FIG. 27 illustrates an injection timing map of the first injector of the second embodiment.
[FIG. 28] FIG. 28 illustrates an injection timing map of the second injector of the second embodiment.
[FIG. 29] FIG. 29 illustrates a distribution of an air-fuel mixture at 90 degATDC of the second embodiment.
[FIG. 30] FIG. 30 illustrates a distribution of an air-fuel mixture at 180 degATDC of the second embodiment.
[FIG. 31] FIG. 31 illustrates a distribution of an air-fuel mixture at 270 degATDC of the second embodiment.
[FIG. 32] FIG. 32 illustrates a distribution of an air-fuel mixture at 320 degATDC of the second embodiment.
[FIG. 33] FIG. 33 illustrates a distribution of an air-fuel mixture at 90 degATDC of the second embodiment.
[FIG. 34] FIG. 34 illustrates a distribution of an air-fuel mixture at 180 degATDC of the second embodiment.
[FIG. 35] FIG. 35 illustrates a distribution of an air-fuel mixture at 270 degATDC of the second embodiment.
[FIG. 36] FIG. 36 illustrates a distribution of an air-fuel mixture at 320 degATDC of the second embodiment.

### Description of Embodiments

Next, embodiments of the invention will be described with reference to the drawings.

### First Embodiment

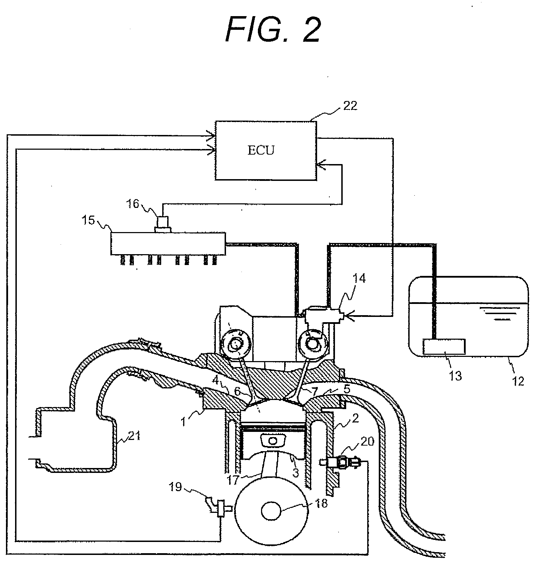

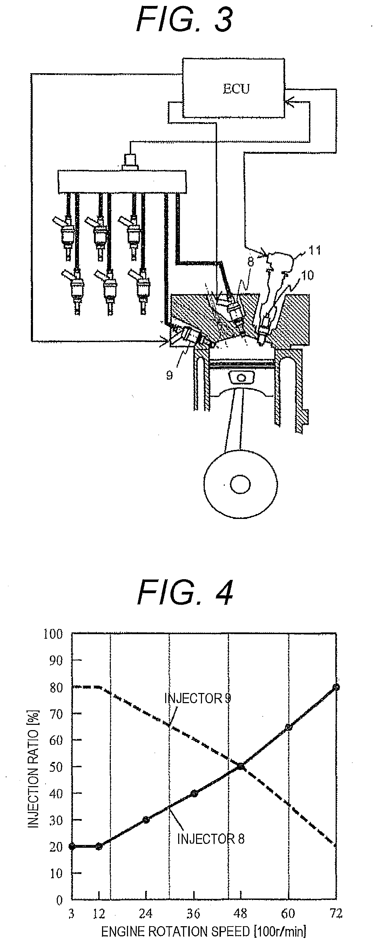

A configuration of a direct injection engine of the embodiment of the invention is illustrated in FIGS. 2 and 3. In this configuration, a naturally aspirated engine having in-line four cylinders of 400 cc for each cylinder is used. FIG. 2 illustrates an outline of a configuration and FIG. 3 illustrates an injector attachment position at a cylinder center cross-section.

A combustion chamber is formed by a cylinder head 1, a cylinder block 2, and a piston 3 inserted into the cylinder block and each of an intake pipe 4 and an exhaust pipe 5 is connected to each cylinder toward the combustion chamber while being branched therefrom at two positions. Then, each of an intake valve 6 and an exhaust valve 7 is provided at two positions to open and close an opening portion. The intake valve 4 and the exhaust valve 5 are of a cam operation type and rotate in synchronization with a crank shaft 16. A cam profile is generally used and an exhaust valve closing timing and an intake valve opening timing are set to the top dead centers.

Each cylinder is provided with two injectors and a first injector 8 is provided at the upper portion of the cylinder in the axial direction and the center portion thereof in the radial direction. Further, a second injector 9 is provided at the upper portion of the cylinder and the outer portion in the radial direction in relation to the intake valve. An ignition plug 10 and an ignition coil 11 are provided between the exhaust pipes 4.

Fuel is stored in a fuel tank 12 and is sent to a high-pressure pump 14 through a fuel pipe by a feed pump 13. The high-pressure fuel pump 14 is driven by an exhaust cam so that boosted fuel is sent to a common rail 15. The feed pump 13 can send the fuel to the high-pressure pump 14 while boosting the fuel to about 0.3 MPa and the high-pressure pump 14 can send the fuel to the common rail 15 while boosting the fuel to 15 MPa to maximum. The common rail 15 is provided with a fuel pressure sensor 16 so that the fuel pressure can be detected. Two injectors for each cylinder, that is, eight injectors in total are connected to a front end of the common rail 16.

The piston 3 is connected to a crank shaft 18 through a connecting rod 17 and the engine rotation speed can be detected by a crank angle sensor 19. A cell motor (not illustrated) is connected to the crank shaft 18 and the crank shaft can be rotated by the cell motor at the time of starting the engine. A water temperature sensor 20 is attached to the cylinder block and a temperature of engine cooling water can be detected. A collector 21 is connected to the upstream of the intake pipe 4. Although not illustrated in the drawings, an air flow sensor and a throttle valve are provided at the upstream side of the collector and the amount of air to be sucked into the combustion chamber can be adjusted by opening and closing the throttle valve. Only one cylinder is illustrated in the drawings, but air is distributed from the collector to each cylinder.

An engine control unit (ECU) 22 monitors signals of various sensors and is connected to devices including the first injector 8, the second injector 9, the ignition plug 10, and the high-pressure fuel pump 14 to control the devices . A ROM of the ECU 22 stores setting values for various devices as map data in response to an engine rotation speed, a water temperature, or an air-fuel ratio which is used in general and also stores the fuel injection amount ratio data of the first injector 8 and the second injector 9 with respect to the engine rotation speed as a feature of the invention illustrated in FIG. 4. Accordingly, when the engine rotation speed is high, it is controlled so that the fuel supply amount ratio of the first injector 8 with respect to the second injector 9 increases compared to a case where the fuel supply amount ratio is low.

Additionally, in the embodiment, the injection start timing map of the first injector 8 and the second injector 9 have the same setting, but the injection timings of the first injector 8 and the second injector 9 may not be the same and may be slightly different from each other.

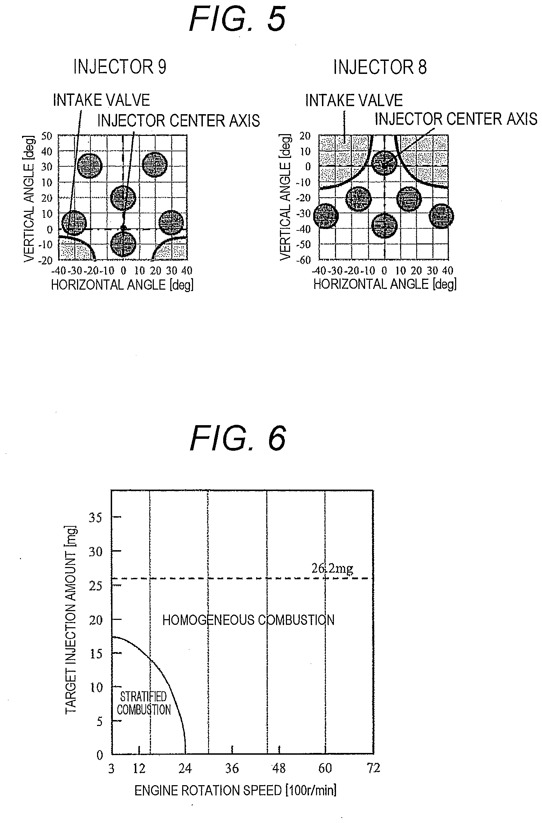

The spray patterns of the first injector 8 and the second injector 9 are illustrated in FIG. 5. The injector is of a multi-hole type. The first injector 8 which is provided at the upper portion of the center portion of the cylinder is disposed so that a plus side in the vertical angle of FIG. 5 faces the ignition plug 10 and each beam of the spray of the first injector 8 is directed toward the exhaust side so as not to interfere with the intake valve 6. The second injector 9 is disposed so that a plus side of the vertical angle of FIG. 5 faces the upper portion of the cylinder and each beam of the second injector 9 is directed toward the lower side of the combustion chamber so as not to interfere with the intake valve 6.

In consideration of the stratified combustion, the first injector 8 is formed such that the spray hole is smaller than that of the second injector 9 in order to decrease the spray penetration force. For that reason, the injection amount of the first injector 8 per unit time becomes 60% with respect to the second injector 9. The injection amount of the injector per unit time becomes 7.3 mg/ms at the fuel pressure of 10 MPa in the first injector 8 and becomes 12.1 mg/ms at the fuel pressure of 10 MPa in the second injector 9.

The operation of the embodiment will be described with reference to FIGS. 6 to 20. First, the operation at the engine rotation speed of 1500 r/min will be described with reference to FIGS. 6 to 9. In the embodiment, a condition is set such that the water temperature is 90°C after warming up. The target value of each device is determined by the ECU 22 from the request torque determined by the accelerator opening degree. The target injection amount is determined from the request torque and the fuel amount for each cylinder in this condition is 26.2 mg. The engine rotation speed is calculated from the crank angle sensor and the engine rotation speed is determined as 1500 r/min.

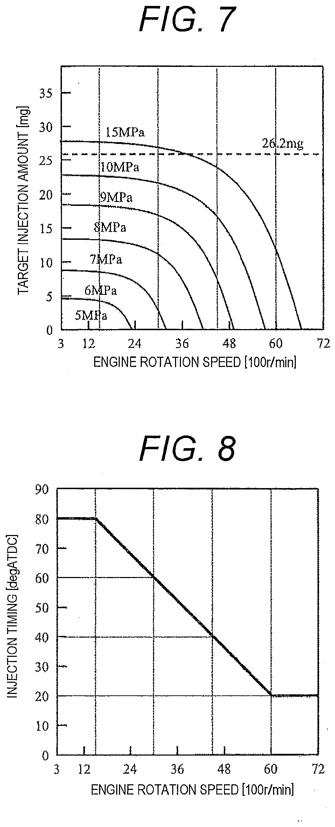

Then, the conditions of the stratified combustion and the homogeneous combustion are determined from the map of the engine rotation speed and the target injection amount for each cylinder illustrated in FIG. 6. In the embodiment, since the injection amount is high to be 26.2 mg, the homogeneous combustion condition is determined. When the homogeneous combustion is determined, the target air-fuel ratio is set to 14.5 and the target intake air amount is calculated. In the embodiment, the throttle valve is controlled so that the target intake air amount becomes 379.9 mg and the intake air amount becomes the target value. The fuel pressure is defined by a different map for the stratified combustion and the homogeneous combustion and in the homogeneous combustion, the fuel pressure is determined from the map of the fuel amount and the engine rotation speed illustrated in FIG. 7. The fuel pressure becomes 10 MPa at the engine rotation speed of 1500 r/min. Then, the high-pressure fuel pump 14 controls the fuel discharge amount to obtain the target fuel pressure.

The fuel injection timing is referred from the map data of the ECU 22, and the stratified combustion and the homogeneous combustion have different map data. Since the homogeneous combustion is exemplified in the embodiment, the injection timing is selected from the map data for the homogeneous combustion. The injection timing is determined by the engine rotation speed illustrated in FIG. 8 and is determined as 80 degBTDC at the engine rotation speed of 1500 r/min. Additionally, as described above, since the first injector 8 and the second injector 9 have the same injection timing map, the injection start timings of the first injector 8 and the second injector 9 are the same.

From the map of the injection amount ratio of FIG. 4, the flow rate ratio of the first injector 8 at the engine rotation speed of 1500 r/min is determined as 23% and the flow rate ratio of the second injector 9 at that engine rotation speed is determined as 77%. The fuel amount for each cylinder is 26.2 mg, the target injection amount of the first injector 8 is 6.0 mg, and the target injection amount of the second injector 9 is 20.2 mg. Next, an injection period is calculated from the fuel pressure and the target injection amount, the injection period of the first injector 8 is set to 0.82 ms (7.4 deg), and the injection period of the second injector 9 is set to 1.67 ms (15.0 deg).

After the intake top dead center portion of the crank angle, the intake valve 6 is opened so that the lift amount increases. Further, when the piston starts to move down, a negative pressure is formed inside the combustion chamber and air flows into the combustion chamber through the gap of the intake valve. At the intake cycle of 80 degATDC, the fuel injection from the first injector 8 and the second injector 9 is started.

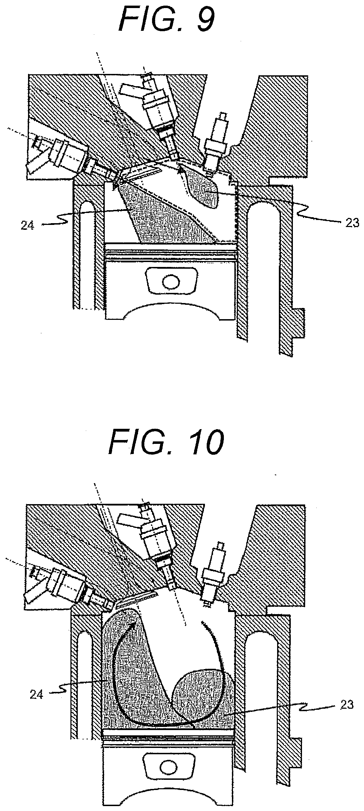

FIG. 9 schematically illustrates a state of the air-fuel mixture inside the combustion chamber at 90 degATDC after 10 deg from 80 degATDC corresponding to the fuel injection start timing. At 90 degATDC, the injection of the second injector 9 is being performed and the injection of the first injector 8 has already been completed. Since the spray penetration force of the spray of the first injector 8 is small, an air-fuel mixture 23 which is gasified from the spray of the first injector 8 advances while flowing in the air passing through the intake valve. Since the speed of the air flowing from the intake valve is not high at 1500r/min, the spray of the second injector 9 having a large penetration force proceeds in the aiming direction and each beam of the spray is directed toward the exhaust side. Accordingly, an air-fuel mixture 24 which is gasified from the spray of the second injector 9 reaches the exhaust lower side. Since the beam of the first injector 8 is directed toward the exhaust side, it is possible to form an air-fuel mixture in an area of the exhaust upper side not reached by the second injector 9.

FIG. 10 illustrates an appearance of the air-fuel mixture inside the combustion chamber at the piston bottom dead center. Since the intake pipe 4 is connected to be offset from the center portion of the combustion chamber and has a shape with a curvature, the amount of the gas directed toward the exhaust side due to the centrifugal force increases. For that reason, a tumble flow which rotates in the clockwise direction in the drawing is formed inside the combustion chamber. The air-fuel mixture is diffused while flowing along the tumble flow. The air-fuel mixture 24 rises toward the intake side by the tumble. Since the air-fuel mixture 23 is distributed to be separated toward the exhaust side in relation to the air-fuel mixture 24, the air-fuel mixture moves along the tumble behind the air-fuel mixture 24.

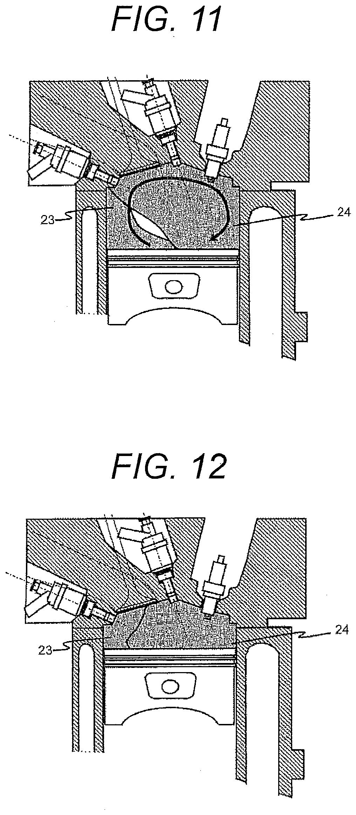

FIG. 11 illustrates an appearance of the air-fuel mixture inside the combustion chamber at 270 degATDC of the compression cycle. The air-fuel mixture moves while flowing along the tumble and the air-fuel mixture 24 located at the intake side at the piston bottom dead center moves toward the exhaust side . The air-fuel mixture 23 which moves behind the air-fuel mixture 24 moves from the exhaust side to the intake side. Further, the air-fuel mixture is compressed in the vertical direction by the upward movement of the piston.

FIG. 12 illustrates an appearance of the air-fuel mixture inside the combustion chamber at 320 degATDC at the late timing of the compression cycle. As it goes toward the late timing of the compression cycle, the tumble flow decreases and the air-fuel mixture moving speed decreases. For that reason, the air-fuel mixture does not greatly move from 270 degBTDC and is compressed to have a distribution near 270 degATDC. An air-fuel mixture which is gasified from the fuel injected from the first injector 8 is distributed to the intake side and an air-fuel mixture which is gasified from the fuel injected from the second injector 9 is distributed to the exhaust side, thereby forming a highly homogeneous air-fuel mixture.

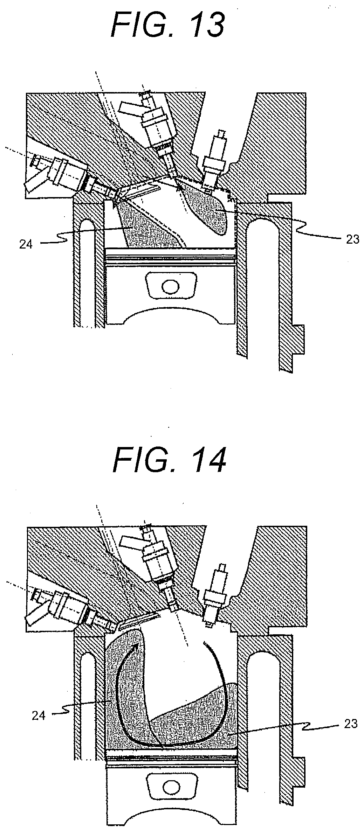

Next, the operation in which the engine rotation speed is at 3000 r/min will be described with reference to FIGS. 13 to 16. The homogeneous combustion is determined from the map of the target injection amount and the engine rotation speed of FIG. 6 and the fuel pressure is determined as 10 MPa from the map of the fuel amount and the engine rotation speed of FIG. 7. The fuel injection timing is determined as 60 degATDC from the map of FIG. 8.

From the map of the injection amount ratio of FIG. 4, the flow rate ratio of the first injector 8 is determined as 35% at the engine rotation speed of 3000 r/min and the flow rate ratio of the second injector 9 is determined as 65% at the engine rotation speed. The fuel amount for each cylinder is 26.2 mg, the target injection amount of the first injector 8 is 9.2 mg, and the target injection amount of the second injector 9 is 17.0 mg. Then, an injection period is calculated from the fuel pressure and the target injection amount, the injection period of the first injector 8 is set to 1.26 ms (22.7 deg), and the injection period of the second injector 9 is set to 1.40 ms (25.2 deg) .

FIG. 13 schematically illustrates an appearance of the air-fuel mixture inside the combustion chamber at 80 degATDC after 20 deg from 60 degATDC corresponding to the fuel injection start timing. At 80 degATDC, the fuel injection of the first injector 8 and the second injector 9 are being performed. The spray of the second injector 9 is further pressed toward the intake lower side (the left and lower side of the drawing) by the flow as the engine rotation speed increases and thus the air-fuel mixture is easily biased toward the intake side compared to the first embodiment. For that reason, an area which cannot be reached by the air-fuel mixture of the second injector 9 is widened compared to the case of the engine rotation speed of 1500 r/min. The air-fuel mixture 23 which is gasified from the spray of the first injector 8 proceeds while flowing along the air passing through the intake valve.

FIG. 14 illustrates an appearance of the air-fuel mixture inside the combustion chamber at the piston bottom dead center. The air-fuel mixture is diffused while flowing along the tumble flow. The air-fuel mixture 24 is distributed to the intake side compared to the first embodiment by the flow from the intake valve and an area occupied by the air-fuel mixture 24 is narrowed. However, since the fuel ratio of the first injector 8 increases and an area occupied by the air-fuel mixture 23 is widened, an area without the air-fuel mixture substantially does not increase.

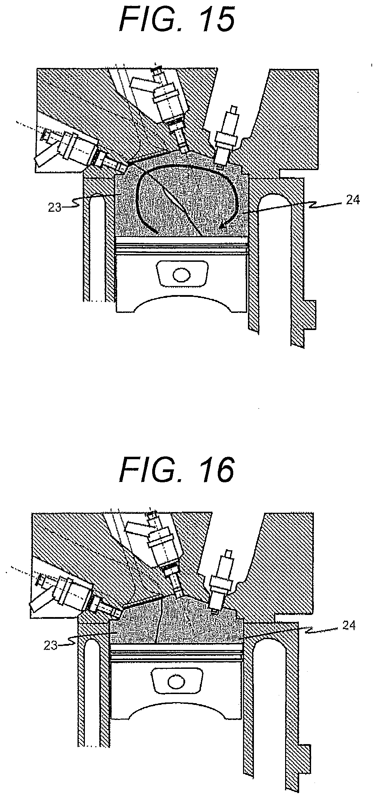

FIG. 15 illustrates an appearance of the air-fuel mixture inside the combustion chamber at 270 degATDC of the compression cycle. The air-fuel mixture moves while flowing along the tumble and the air-fuel mixture 24 located at the intake side at the piston bottom dead center moves toward the exhaust side . The air-fuel mixture 23 moving behind the air-fuel mixture 24 moves from the exhaust side toward the intake side. Further, the air-fuel mixture is compressed in the vertical direction by the upward movement of the piston.

FIG. 16 illustrates an appearance of the air-fuel mixture inside the combustion chamber at 320 degATDC at the late timing of the compression cycle. Since the rotation speed increases compared to the case of the engine rotation speed of 1500 r/min, an area occupied by the air-fuel mixture 24 is narrowed. However, since an area occupied by the air-fuel mixture 23 is widened, a highly homogeneous air-fuel mixture is formed even when the engine rotation speed increases.

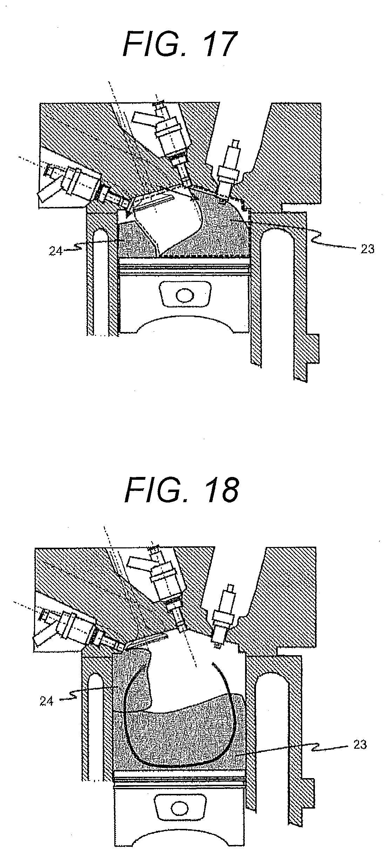

Next, the operation when the engine rotation speed is 6000 r/min will be described with reference to FIGS. 17 to 20. The homogeneous combustion is determined from the map of the target injection amount and the engine rotation speed of FIG. 6 and the fuel pressure is determined as 15 MPa from the map of the fuel amount and the engine rotation speed of FIG. 7. From the map of FIG. 8, the fuel injection timing is determined as 20 degATDC.

From the map of the injection amount ratio of FIG. 4, the flow rate ratio of the first injector 8 at the engine rotation speed of 6000 r/min is determined as 65% and the flow rate ratio of the second injector 9 at the engine rotation speed is determined as 35%. The fuel amount for each cylinder is 26.2 mg, the target injection amount of the first injector 8 is 17.0 mg, and the target injection amount of the second injector 9 is 9.2 mg.

Additionally, the fuel injection amount per unit time at the fuel pressure of 15 MPa is 8.9 mg/ms in the first injector 8 and is 14.8 mg/ms in the second injector 9. For the adjustment of the injection period with respect to a change in fuel pressure, a correlation equation for the fuel pressure may be applied to the ECU 22 or the injection rate of each fuel pressure may be provided as map data.

An injection period is calculated from the fuel pressure and the target injection amount, the injection period of the first injector 8 is set to 1.91 ms (68.8 deg), and the injection period of the second injector 9 is set to 0.62 ms (22.3 deg).

FIG. 17 schematically illustrates an appearance of the air-fuel mixture inside the combustion chamber at 80 degATDC after 60 deg from 20 degATDC corresponding to the fuel injection start timing. At 80 degATDC, the fuel injection of the first injector 8 is being performed and the fuel injection of the second injector 9 has already been completed. Since the engine rotation speed is even higher than 3000 r/min, the spray of the second injector 9 is further pressed toward the intake lower side (the left and lower side of the drawing) and further the air-fuel mixture is biased toward the intake side. For that reason, an area which cannot be reached by the air-fuel mixture of the second injector 9 is widened compared to the case of the engine rotation speed of 3000 r/min. The air-fuel mixture 23 which is gasified from the spray of the first injector 8 proceeds while flowing along the air passing through the intake valve.

FIG. 18 illustrates an appearance of the air-fuel mixture inside the combustion chamber at the piston bottom dead center. The air-fuel mixture is diffused while flowing along the tumble flow. The air-fuel mixture 24 is distributed to be biased to the intake side compared to the case of the engine rotation speed of 3000 r/min by the flow from the intake valve. Further, the ratio of the fuel injected from the second injector 9 also decreases and thus an area occupied by the air-fuel mixture 24 is narrowed. In contrast, the ratio of the fuel injected from the first injector 8 increases and thus an area occupied by the air-fuel mixture 23 is widened. In this way, since the air-fuel mixture of the first injector 8 is distributed to an area which cannot be reached by the air-fuel mixture of the second injector 9, an area without the air-fuel mixture substantially does not change compared to the case of the engine rotation speed of 1500 r/min or 3000 r/min.

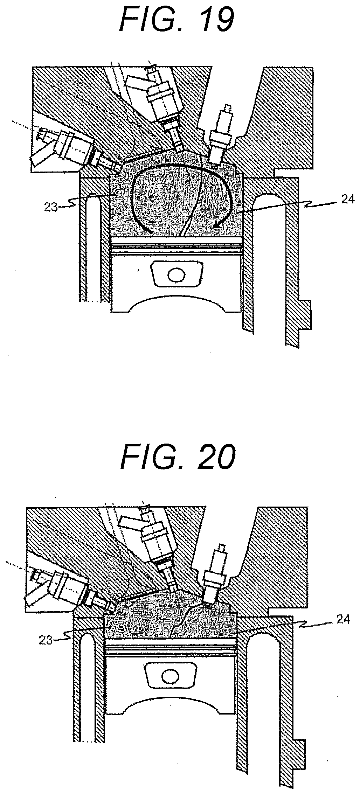

FIG. 19 illustrates an appearance of the air-fuel mixture inside the combustion chamber at 270 degATDC of the compression cycle. The air-fuel mixture moves while flowing along the tumble and the air-fuel mixture 24 located at the intake side at the piston bottom dead center moves to the exhaust side. The air-fuel mixture 23 moving behind the air-fuel mixture 24 moves from the exhaust side to the intake side. Further, the air-fuel mixture is compressed in the vertical direction by the upward movement of the piston.

FIG. 20 illustrates an appearance of the air-fuel mixture inside the combustion chamber at 320 degATDC of the late timing of the compression cycle. Since the rotation speed increases compared to the engine rotation speed of 3000 r/min and the ratio of the fuel injected from the second injector 9 decreases, an area occupied by the air-fuel mixture 24 is narrowed. In contrast, since the ratio of the fuel injected from the first injector 8 increases and an area occupied by the air-fuel mixture 23 is widened, the air-fuel mixture is uniformly distributed even when the engine rotation speed further increases.

### Second Embodiment

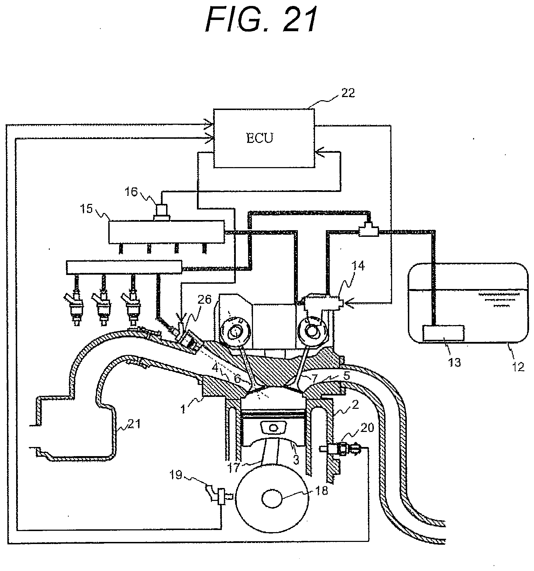

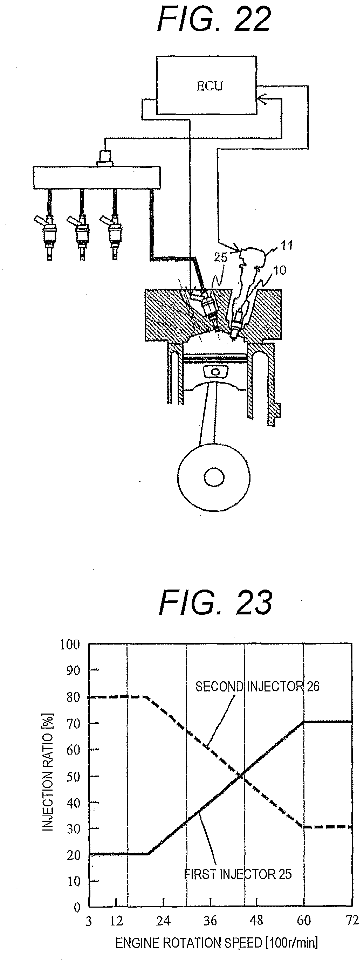

FIGS. 21 and 22 illustrate a configuration of a direct injection engine of a second embodiment. FIG. 21 illustrates an outline of a configuration and FIG. 22 illustrates an attachment position of a first injector 25 at a cylinder center cross-section.

The configuration is of a naturally aspirated engine having in-line four cylinders of 400 cc for each cylinder similarly to the first embodiment. In the second embodiment, the first injector 25 is provided at the upper portion of the cylinder in the axial direction and the center portion thereof in the radial direction similarly to the first embodiment. A second injector 26 is provided at the intake pipe 4 differently from the first embodiment. The second injector 26 provided at the intake pipe is driven by the fuel pressure of the feed pump 13. For that reason, the fuel pipe is branched at the downstream of the feed pump 13. Similarly to the first embodiment, the fuel pipe at one side is connected to the first injector provided at the combustion chamber of each cylinder from the common rail 15 after the fuel is boosted by the high-pressure fuel pump 14 . The fuel pipe at the other side is connected to the second injector provided at the intake pipe of each cylinder while the fuel passes through a delivery pipe 27 after branching. The fuel pressure of the second injector is uniformly set to 0.35 MPa.

The engine control unit (ECU) 22 monitors signals of various sensors similarly to the first embodiment and is connected to devices including the first injector 25, the second injector 26, the ignition plug 10, and the high-pressure fuel pump 14 to control the devices . A ROM of the ECU 22 stores the fuel injection amount ratio data of the first injector 25 and the second injector 26 with respect to the engine rotation speed as illustrated in FIG. 23. When the engine rotation speed is high, the fuel supply amount ratio of the first injector 25 with respect to the second injector 26 is controlled to be larger than that of a case where the engine rotation speed is low.

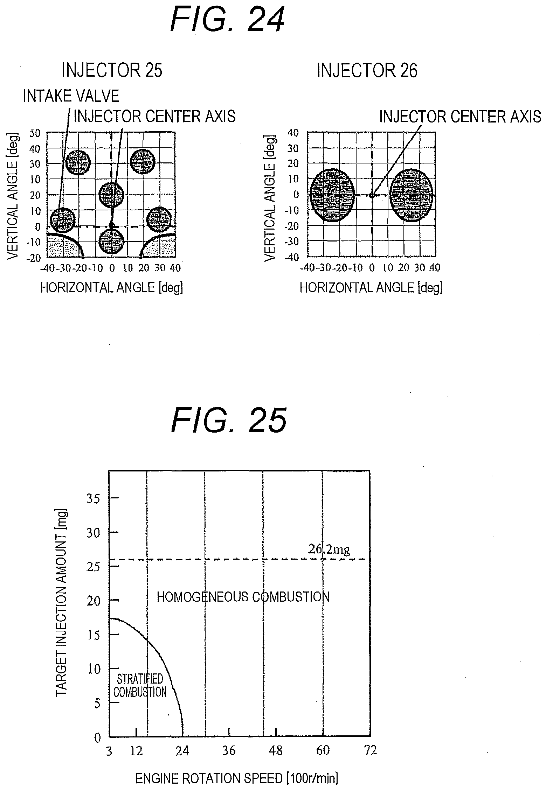

The spray patterns of the first injector 25 and the second injector 26 are illustrated in FIG. 24. The injector is of a multi-hole type. Similarly to the first embodiment, the first injector 25 which is provided at the upper portion of the center portion of the cylinder is disposed so that a plus side in the vertical angle of FIG. 24 faces the ignition plug 10 and each beam of the spray of the first injector 25 is directed toward the exhaust side so as not to interfere with the intake valve 6. The second injector 26 has a symmetrical shape in the vertical direction. When the second injector is attached to the intake pipe, a spray specification in which the beam does not interfere with the intake pipe and each beam aims at the intake valve is provided.

Similarly to the first embodiment, the injection amount per unit time of the first injector 25 is 7.3 mg/ms at the fuel pressure of 10 MPa. The second injector 26 is 4 mg/ms at the fuel pressure of 0.35 MPa.

The operation of the embodiment will be described with reference to FIGS. 25 to 20. First, the operation when the engine rotation speed is 1500 r/min will be described with reference to FIGS. 25 to 28. In the embodiment, a condition is set such that the water temperature is 90°C after warming up. The target value of each device is determined by the ECU 22 from the request torque determined by the accelerator opening degree. Similarly to the first embodiment, the target injection amount is determined from the request torque and the fuel amount for each cylinder in this condition is 26.2 mg. The engine rotation speed is calculated from the crank angle sensor and the engine rotation speed is determined as 1500 r/min.

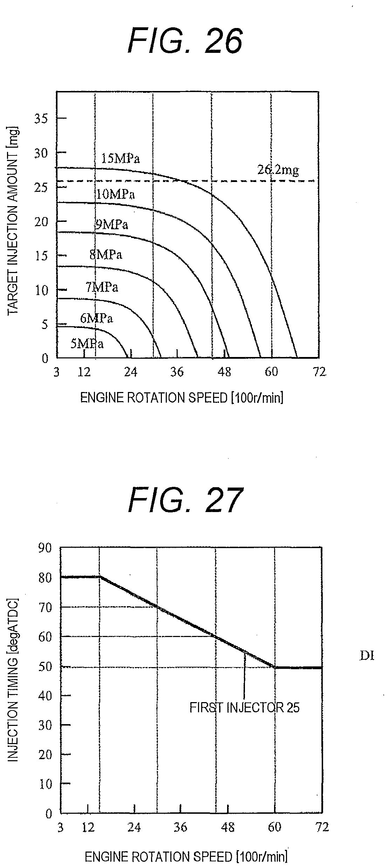

Then, the conditions of the stratified combustion and the homogeneous combustion are determined from the map of the engine rotation speed and the target injection amount for each cylinder illustrated in FIG. 25. In the embodiment, since the injection amount is high to be 26.2 mg, the homogeneous combustion condition is determined. When the homogeneous combustion is determined, the target air-fuel ratio is set to 14.5 and the target intake air amount is calculated. In the embodiment, the throttle valve is controlled so that the target intake air amount becomes 379.9 mg and the intake air amount becomes the target value. The pressure of the fuel injected from the first injector 25 is defined by a different map for the stratified combustion and the homogeneous combustion and in the homogeneous combustion, the fuel pressure is determined from the map of the fuel amount and the engine rotation speed illustrated in FIG. 26. The fuel pressure becomes 10 MPa at the engine rotation speed of 1500 r/min. Then, the high-pressure fuel pump 14 controls the fuel discharge amount to obtain the target fuel pressure.

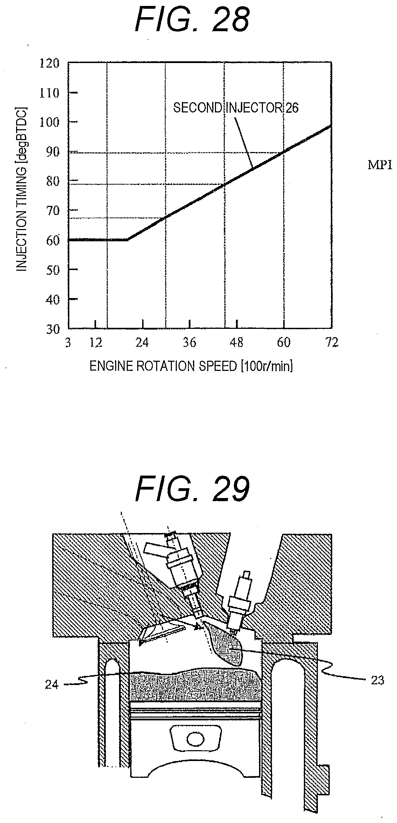

The fuel injection timing is referred from the map data of the ECU 22, and the stratified combustion and the homogeneous combustion have different map data. Since the homogeneous combustion is exemplified in the embodiment, the injection timing is selected from the map data for the homogeneous combustion. As illustrated in FIGS. 27 and 28, the injection timing of the second embodiment is set to the exhaust cycle of the second injector 26 and the intake cycle of the first injector 25. As the engine rotation speed becomes higher, the injection timing is controlled to become faster. At the engine rotation speed of 1500 r/min, the injection timing of the first injector 25 is selected as 80 degATDC and the injection timing of the second injector 26 is selected as 60 degBTDC.

Then, from the map of the injection amount ratio of FIG. 23, the flow rate ratio of the first injector 25 at the engine rotation speed of 1500 r/min is determined as 20% and the flow rate ratio of the second injector 9 at the engine rotation speed is determined as 80%. The fuel amount from the first injector 25 is set to 5.24 mg and the fuel amount from the second injector 26 is set to 20.96 mg. Then, an injection period is calculated from the fuel pressure and the target injection amount, the injection period of the first injector 25 is set to 0.72 ms (6.48 deg), and the injection period of the second injector 26 is set to 5.24 ms (47.16 deg).

When the piston moves up while the exhaust valve is opened during the exhaust cycle, the burned gas inside the combustion chamber is discharged from the exhaust pipe. Then, the fuel injection from the second injector 26 is started at 60 degBTDC and the fuel injection is ended at 12.84 BTDC. Since the intake valve is not opened during a fuel injection period of the second injector, the fuel substantially does not flow inside the intake pipe and the spray straightly moves toward the intake valve. For that reason, the fuel injected from the second injector 26 does not adhere to the intake pipe. Further, since there is a time from the end of the fuel injection until the intake valve is opened, most of the injected fuel adheres to the intake valve .

After the intake top dead center portion of the crank angle, the intake valve 6 is opened so that the lift amount increases. Further, when the piston starts to move down, a negative pressure is formed inside the combustion chamber and air flows into the combustion chamber through the gap of the intake valve. Particularly, when the lift amount is very small immediately after the intake valve 6 is opened, air flows into the combustion chamber at a very fast speed. The fuel, which is injected from the second injector 26 and adheres to the intake valve 6, flows along the high-speed air flow flowing from the entire circumference of the intake valve. Since the fuel becomes fine particles by a shear force with the high-speed air flow at the time of flowing into the combustion chamber, the fuel flows into the combustion chamber along the flow of sucked air while not adhering to the cylinder wall surface or the piston.

At 80 degATDC of the intake cycle, fuel is injected from the first injector 8. FIG. 29 schematically illustrates an appearance of the air-fuel mixture inside the combustion chamber at 90 degATDC after 10 deg from 80 degATDC corresponding to the fuel injection start timing. At 90 degATDC, the fuel injection of the first injector 8 has already been completed.

Most of the fuel injected from the second injector 26 flows in the flow generated immediately after the intake valve is opened. For that reason, most of the air-fuel mixture 24 which is gasified from the fuel injected from the second injector 26 is mixed only with the air flowing at the initial timing to form the air-fuel mixture on the surface of the piston. Since the air flows from the entire circumference of the intake valve, the air-fuel mixture is not substantially biased toward the intake side or the exhaust side. Further, since the injection timing of the first injector 25 is set to the middle timing of the intake cycle, the air-fuel mixture 23 which is gasified from the fuel injected from the first injector is formed behind the air-fuel mixture 24 while being mixed with the sucked air after the inflow of the air-fuel mixture 24. Since the air-fuel mixture 23 and the air-fuel mixture 24 do not overlap each other, a rich air-fuel mixture is hardly formed.

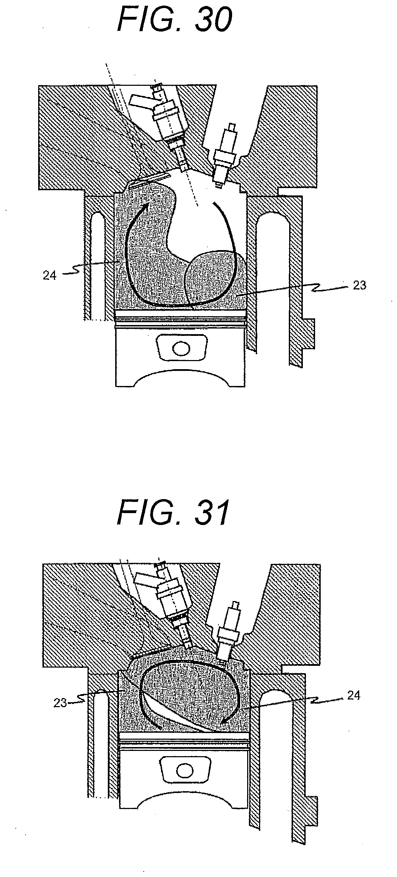

FIG. 30 illustrates an appearance of the air-fuel mixture inside the combustion chamber at the piston bottom dead center. The air-fuel mixture 24 is diffused while flowing to the intake side by the tumble flow and the air-fuel mixture 23 is diffused behind the air-fuel mixture 24.

FIG. 31 illustrates an appearance of the air-fuel mixture inside the combustion chamber at 270 degATDC of the compression cycle. The air-fuel mixture flows along the tumble and the air-fuel mixture 24 located at the intake side at the piston bottom dead center moves to the exhaust side. The air-fuel mixture 23 moving behind the air-fuel mixture 24 moves from the exhaust side to the intake side. Further, the air-fuel mixture is compressed in the vertical direction by the upward movement of the piston.

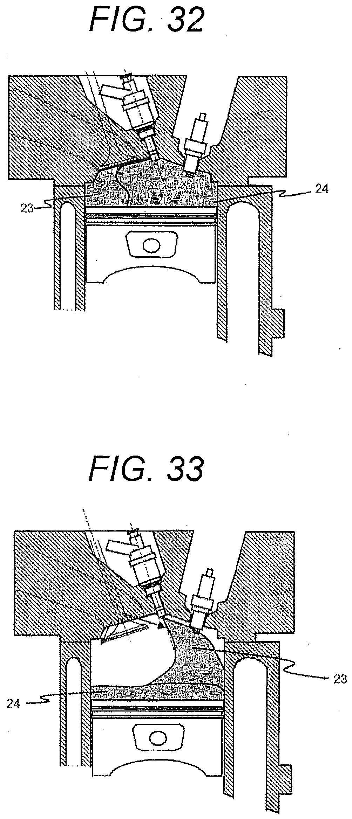

FIG. 32 illustrates an appearance of the air-fuel mixture inside the combustion chamber at 320 degATDC of the late timing of the compression cycle. As it approaches the late timing of the compression cycle, the tumble flow decreases and the air-fuel mixture moving speed decreases. For that reason, the air-fuel mixture does not greatly move from 270 degBTDC and is compressed to have a distribution state near 270 degATDC.

In this way, when the injection of the second injector is stopped before the opening of the intake valve so that the fuel is disposed on the surface of the intake valve, the fuel is changed into fine particles by a high-speed air flow generated immediately after opening the intake valve to suppress adhesion of the fuel to the wall surface of the cylinder. Further, when the fuel injection timing of the first injector is set to the middle timing of the intake cycle and the fuel is injected from the first injector to a position where only air inflows to form the air-fuel mixture after the fuel injected from the second injector is sucked into the combustion chamber, it is possible to decrease an area without the fuel and thus to improve the uniformity inside the combustion chamber.

Next, the operation when the engine rotation speed is 6000 r/min will be described with reference to FIGS. 33 to 36. The homogeneous combustion is determined from the map of the target injection amount and the engine rotation speed of FIG. 25 and the fuel pressure is determined as 15 MPa from the map of the target injection amount and the engine rotation speed of FIG. 26.

From the map of FIGS. 27 and 28, the fuel injection timing of the first injector is determined as 50 degATDC and the fuel injection timing of the second injector is determined as 90 degBTDC.

From the map of the injection amount ratio of FIG. 23, the flow rate ratio of the first injector 25 at the engine rotation speed of 6000 r/min is determined as 70% and the flow rate ratio of the second injector 26 at the engine rotation speed is determined as 30%. The fuel amount for each cylinder becomes 26.2 mg, the target injection amount of the first injector 25 becomes 18.34 mg, and the target injection amount of the second injector becomes 7.86 mg. Additionally, the fuel injection amount per unit time at the fuel pressure of 15 MPa of the first injector 25 becomes 8.9 mg/ms. The fuel pressure of the second injector 26 uniformly becomes 4 mg/ms. An injection period is calculated from the fuel pressure and the target injection amount, the injection period of the first injector 25 is set to 2.05 ms (73.8 deg), and the injection period of the second injector 26 is set to 1.97 ms (70.92 deg).

When the piston moves up while the exhaust valve is opened during the exhaust cycle, the burned gas inside the combustion chamber is discharged from the exhaust pipe. Then, the fuel injection from the second injector 26 is started at 90 degBTDC and the fuel injection is ended at 19.08 degBTDC. Since the intake valve is not opened during a fuel injection period of the second injector, the fuel substantially does not flow inside the intake pipe and the spray straightly moves toward the intake valve. For that reason, the fuel injected from the second injector 26 does not adhere to the intake pipe. Further, since there is a time from the end of the fuel injection until the intake valve is opened, most of the injected fuel adheres to the intake valve.

After the intake top dead center portion of the crank angle, the fuel, which is injected from the second injector 26 and adheres to the intake valve 6, flows along the high-speed air flow flowing from the entire circumference of the intake valve and flows into the combustion chamber. Since the fuel becomes fine particles by a shear force with the high-speed air flow generated at the time of opening the intake valve, the fuel flows into the combustion chamber along the flow of sucked air while not adhering to the cylinder wall surface or the piston.

At the intake cycle of 50 degATDC, fuel is injected from the first injector 25. FIG. 33 schematically illustrates an appearance of the air-fuel mixture inside the combustion chamber at 90 degATDC after 40 deg from 50 degATDC corresponding to the fuel injection start timing. Since the injection period of the first injector 25 is 73.8 deg, the fuel injection is continued at 90 degATDC.

Most of the fuel injected from the second injector 26 flows in the flow generated immediately after the intake valve is opened. For that reason, most of the air-fuel mixture 24 which is gasified from the fuel injected from the second injector 26 is mixed only with the air flowing at the initial timing to form the air-fuel mixture on the surface of the piston. Since the air flows from the entire circumference of the intake valve, the air-fuel mixture is not substantially biased toward the intake side or the exhaust side. Further, since the injection timing of the first injector 25 is set to the middle timing of the intake cycle, the air-fuel mixture 23 which is gasified from the fuel injected from the first injector is formed behind the air-fuel mixture 24 while being mixed with the sucked air after the inflow of the air-fuel mixture 24. Accordingly, since the overlapping area of the air-fuel mixture 23 and the air-fuel mixture 24 is small, a rich air-fuel mixture is hardly formed.

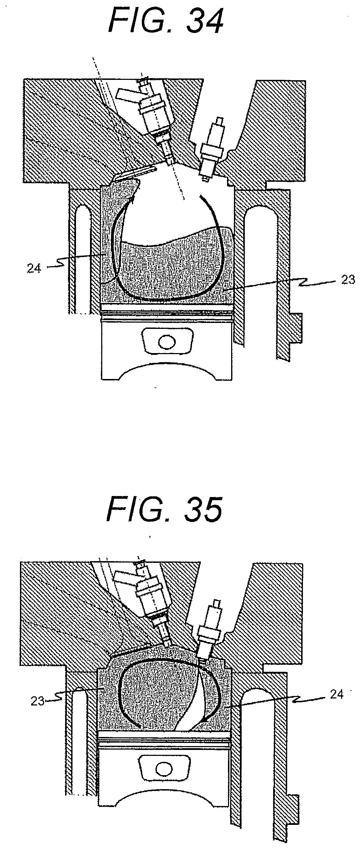

FIG. 34 illustrates an appearance of the air-fuel mixture inside the combustion chamber at the piston bottom dead center. The air-fuel mixture 24 is diffused while flowing to the intake side by the tumble flow and the air-fuel mixture 23 is diffused behind the air-fuel mixture 24

FIG. 35 illustrates an appearance of the air-fuel mixture inside the combustion chamber at 270 degATDC of the compression cycle. The air-fuel mixture flows along the tumble and the air-fuel mixture 24 located at the intake side at the piston bottom dead center moves to the exhaust side. The air-fuel mixture 23 moving behind the air-fuel mixture 24 moves from the exhaust side to the intake side. Further, the air-fuel mixture is compressed in the vertical direction by the upward movement of the piston.

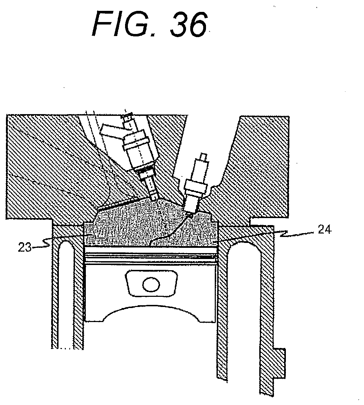

FIG. 36 illustrates an appearance of the air-fuel mixture inside the combustion chamber at 320 degATDC of the late timing of the compression cycle. As it approaches the late timing of the compression cycle, the tumble flow decreases and the air-fuel mixture moving speed decreases. For that reason, the air-fuel mixture does not greatly move from 270 degBTDC and is compressed to have a distribution state near 270 degATDC.

When the engine rotation speed is high, the injection amount ratio of the first injector is increased and the fuel ratio of the second injector is decreased. Then, the injection of the second injector is stopped before the opening of the intake valve so that the fuel is disposed on the surface of the intake valve. Accordingly, since the fuel becomes fine particles by the high-speed air flow generated immediately after the opening of the intake valve, it is possible to suppress adhesion of the fuel to the wall surface of the cylinder. Further, when the fuel injection timing of the first injector is set to the middle timing of the intake cycle and the fuel is injected from the first injector only to a position where only air inflows to form the air-fuel mixture after the fuel injected from the second injector is sucked into the combustion chamber, it is possible to decrease an area without the fuel and thus to improve the uniformity inside the combustion chamber.

## Claims

1. A fuel injection control device for controlling a fuel injection of an engine, the device comprising a cylinder, a first injector disposed at an upper portion of the cylinder in the axial direction and a center portion thereof in the radial direction, an intake valve disposed at an upper portion of the cylinder in the axial direction and an outer portion thereof in the radial direction in relation to the first fuel injection device, and a second injector supplying fuel from an upper portion of the cylinder in the axial direction and at least an outer portion in the radial direction in relation to the intake valve,
wherein a rotation speed of the engine is high, a fuel supply amount ratio of the first injector with respect to the second injector is controlled to be larger than that of a case where the rotation speed is low.

2. The fuel injection control device according to claim 1,
wherein the second injector is disposed at an upper portion of the cylinder and an outer portion thereof in the radial direction in relation to the intake valve.

3. The fuel injection control device according to claim 1,
wherein the engine includes an intake pipe which supplies air to the cylinder through the intake valve and the second injector is disposed at the intake pipe.
